# EUROPÄISCHE PATENTSCHRIFT

(11) **EP 2 176 697 B1**
(45) Veröffentlichungstag und Bekanntmachung des Hinweises auf die Patenterteilung: **20.09.2017**
(21) Anmeldenummer: 08785219.0
(22) Anmeldetag: 30.07.2008
(51) Int. Cl.: G02B 6/44

(54) **MUFFE FÜR GLASFASERKABEL**
JUNCTION BOX FOR FIBRE-OPTICAL CABLES
MANCHON POUR CÂBLES À FIBRES OPTIQUES

(30) Priorität: 30.07.2007 DE 102007035709
(43) Veröffentlichungstag der Anmeldung: 21.04.2010
(73) Patentinhaber: EWE Netz GmbH, 26133 Oldenburg (DE)
(72) Erfinder: BEIER, Siegfried, 27798 Hude (DE); HARMS, Reimo, 26802 Moormerland (DE); WEGENER, Alfred, 47918 Tönisvorst (DE)
(74) Vertreter: Siekmann, Gunnar
(86) Internationale Anmeldenummer: PCT/EP2008/006274
(87) Internationale Veröffentlichungsnummer: WO 2009/015875

(56) Entgegenhaltungen:
- EP-A- 1 615 057
- EP-A1- 0 908 996
- WO-A-2007/019158
- WO-A2-92/22842
- GB-A- 2 108 779
- US-A- 5 450 518
- US-A- 5 684 911
- US-A- 5 862 290

## Beschreibung

Die Erfindung betrifft eine Muffe für Glasfaserkabel (auch Lichtwellenleiter [nachfolgend LWL genannt]), insbesondere eine Hausanschlussmuffe.

Als Stand der Technik sei allgemein auf folgende Dokumente hingewiesen: EP-A1 -1122571, JP-A-01310305, DE-A1 -19542637, US-A1 -2004/0123998, DE-A1-4341999 und insbesondere EP-A1 -1615057 sowie US-A1-5,684,911, EP-A1-0908996 und US-A1-5,862,290.

Solche Muffen werden insbesondere benötigt, um von einem LWL-Strang einen Zweig-LWL abzuzweigen und diesen in einer gewünschten Weise mit einem Hausanschluss zu verbinden, was unter Umständen umfangreiche Erdarbeiten und Installationstätigkeiten notwendig macht.

Besonderes Ziel der Erfindung ist es hierbei erfindungsgemäß eine Muffe bereitzustellen, die sehr zuverlässig ist, sehr dicht ist, günstig ist in der Herstellung, eine einfache Verbindung von Zweig-LWL und Haupt-LWL am Montageort ermöglicht, hinreichend dicht ist um über Jahre hinweg eine volle Funktionstätigkeit der Verbindung von Zweig-LWL und Haupt-LWL zu gewährleisten und ausreichend stabil genug ist, die im Erdboden auf die Muffe einwirkenden Kräfte so aufzunehmen, dass eine Schädigung oder Zerstörung der Muffe sicher ausgeschlossen werden kann.

Die erfindungsgemäße Muffe zeichnet sich dadurch aus, dass sie im Vergleich zu Lösungen wie sie aus dem Stand der Technik bekannt sind, vergleichsweise sehr kurz ist und eine hohe Kabelzugentlastung ermöglicht (Die Zugentlastung des Kabels wird nicht geschwächt oder aufgehoben, wenn das Kabel z.B. zur Erstellung eines Abzweiges geöffnet wird, da sich die Zugentlastung im Kabelkern befindet. Die Bündeladern mit den Fasern sind darum gewickelt), sehr torsionssteif ist und im Wesentlichen nur aus vier Kunststoffteilen besteht, die mittels einer Manschette (Schrumpfschlauchsystem) ummantelt werden.

Die Torsionssteifigkeit der erfindungsgemäßen Muffe ist gegenüber bekannten Lösungen erhöht. Die Torsionssteifigkeit des Kabels wird im Bereich der montierten Manschette erhöht.

Die Länge der gesamten erfindungsgemäßen Muffe (soweit noch vom Schrumpfschlauchsystem eingefasst) beträgt bevorzugt etwa 75 cm.

Die erfindungsgemäße Muffe besteht dabei aus einer Spleißkassette, bestehend aus einem Unterteil (teilweise aus EP 1615057, dort Figur 3 bekannt) sowie einen nicht transparenten Deckel, der die Kassette verschließt und die Kassette wird unter- und oberseitig von Halteteilen, sog. Haltewinkeln (Halbschalen), bedeckt und diese unter- bzw. oberseitigen Haltewinkel sind hinsichtlich ihres Aufbaus identisch und können exakt zur Gegeneinanderlage gebracht werden, wobei zur Fixierung der Lage entsprechende Vorsprünge und Öffnungen ausgebildet sind, die ineinander zur Anlage gebracht werden können.

Die Ansicht eines Unterteils einer erfindungsgemäßen Spleißkassette ist in **Figur 1a****,** **1b** **und** **1c** gezeigt, die Ansicht eines entsprechenden die Spleißkassette verschließenden Deckels ist in **Figur 2** dargestellt, verschiedene Ansichten eines Haltewinkels, der unter- oder oberseitig in der Muffe die Spleißkassette bedeckt, sind in den **Figuren 3a bis 3c** gezeigt, eine zusammengesetzte Muffe ist in **Figur 3d** **und** **3e** gezeigt.

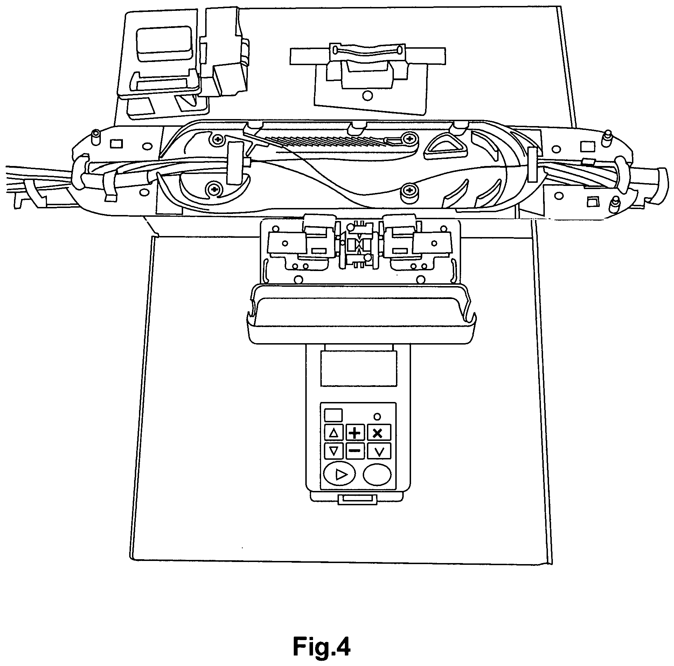

Schließlich ist in **Figur 4** der Aufbau eines Montagetisches, der einen unteren Haltewinkel sowie einen darauf aufgesetzten unteren Teil der Kassette aufnimmt, um einen sicheren Spleißvorgang zu gewährleisten.

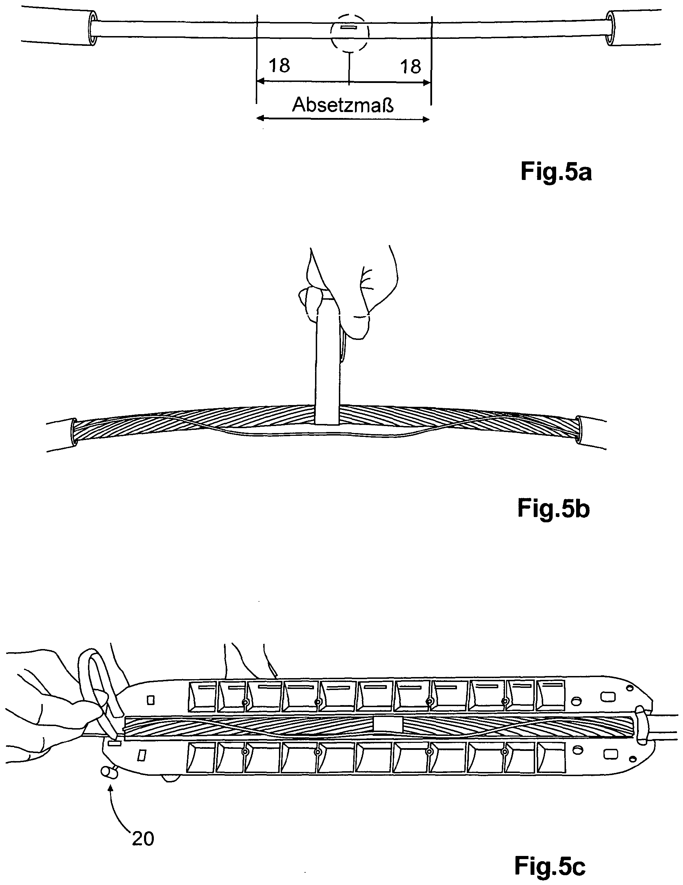

Die **Figuren 5a bis 5k** zeigen die erfindungsgemäße Montage einer erfindungsgemäßen Muffe. Diese Montage ist nachstehend beschrieben:
Die erfindungsgemäße Montage kann kurz mit folgenden Schritten beschrieben werden:
   a) Ein Rohr, welches einen Hauptlichtwellenleiter aufnimmt, wird auf einer Länge von etwa 1,20 m bis 1,60 m, bevorzugt etwa 1,40 m, geöffnet.
   b) Von einer Markierung auf dem Hauptlichtwellenleiter wird beidseitig ein Kabelmantel, der den Hauptlichtwellenleiter umschließt, auf einer Länge von etwa 10 bis 35 cm, bevorzugt 18 cm, entfernt.
   c) Von dem Hauptlichtwellenleiter, der aus einer Vielzahl von Bündeladern besteht, wird die richtige Bündelader ausgezählt.
   d) Die erforderliche Bündelader wird vom Wendepunkt her abgewickelt.
   e) Die restlichen Bündeladern werden im Wendepunkt fixiert.
   f) Der untere Haltewinkel (Unterteil des Muffengehäuses) wird auf den Mantel des Hauptlichtwellenleiters fixiert, indem der Hauptlichtwellenleiter in den Kabelkanal des Unterteils eingelegt wird.
   g) Die betroffene Bündelader wird mit einem entsprechenden Werkzeug geöffnet.
   h) Eine Spleißkassette wird mit ihrem Einführungsschlitz zwischen dem Halter und der Bündelader geführt und kommt zwischen der betroffenen Bündelader und dem Haltewinkel zur Anordnung, das Kassettenunterteil wird mit einem Haltewinkel befestigt.
   i) Das Lichtwellenleiter-Hausanschlusskabel wird auf einer Länge von mehr als 50 cm, bevorzugt etwa 1 bis 2 m, besonders bevorzugt auf etwa 1,30 m, abgemantelt.
   j) Das Hausanschlusskabel (Zweiglichtwellenleiter) wird an den Haltewinkeln fixiert.
   k) Der untere Haltewinkel wird zusammen mit Kassette und Zweiglichtwellenleiter zum Spleißen auf einen Spleißtisch gelegt; nach dem Spleißvorgang wird die Kassette mit einem transparenten (durchsichtigen) Deckel verschlossen, wobei der Deckel die technische Funktion eines Sichtfensters aufweist, mittels dem überprüft werden kann, ob beim Aufbringen des Deckels Fasern zwischen Spleißgerät, Unterteil und Deckel eingeklemmt werden, was zu vermeiden ist.
   l) Oberer Haltewinkel (Oberteil des Gehäuses der Muffe) wird auf den unteren Teil gelegt und beide Teile stehen hierbei direkt im Eingriff und liegen unter- wie auch oberseitig in der Spleißkassette an.
   m) Um die Anordnung aus Haltewinkel und darin eingelegter Kassette wird eine Schutzanlage gelegt.
   n) Es werden Flammschutzwickel auf den Kabelmantel von Hauptlichtwellenleiter wie auch Zweiglichtwellenleiter gebracht.
   o) Es wird eine Manschette um die gesamte Anordnung geschlagen und mit einer Schiene verschlossen.
   p) Mit Hilfe von Wärmeeinwirkung, bevorzugt mittels einer Flamme, wird die Manschette geschrumpft bis sie fest auf dem Gehäuse der Muffe anliegt als auch beidseitig der Muffe die dort befindlichen Kabel fest umschließt, wobei einzelne dieser vorgenannten Schritte vertauschbar sind.

Nachstehend wird die gesamte Montage ausführlicher erläutert, wobei hier auch der Hinweis wichtig ist, dass auch einzelne Montageschritte weggelassen werden bzw. vertauscht werden können.

### Ortung des Wendepunktes

Während der Aushubarbeiten wird der Wendepunkt des Kabels mit einem Metalldetektor durch das freigelegte Rohr geortet. Die Anordnung des Muffenloches erfolgt mittig um den Wendepunkt.

### Öffnen des Rohres und Absetzen des Kabels (siehe Figur 5a)

Zuerst wird das Rohr auf einer Länge von ca. 1,40 m symmetrisch zum Wendepunkt mit einem Längsschneider geöffnet. Jetzt wird die Wendepunktmarkierung (1) auf dem Kabel sichtbar. Von diesem Punkt aus wird der Kabelmantel zu beiden Seiten auf einer Länge von jeweils 18 cm entfernt.

### Die Bündelader (siehe Figur 5b)

Als nächstes wird die richtige Bündelader ausgezählt, z. B. wird mit einer roten Bündelader gestartet und eine schwarze Bündelader gibt die Zählrichtung vor.

Die erforderliche Bündelader wird vom Wendepunkt her abgewickelt. Die restlichen Bündeladern werden mit einem Isolierband im Wendepunkt fixiert.

### Anbringen des Haltewinkels (siehe Figur 5c)

Der Haltewinkel (Halbschale) wird mit zwei Kabelbindern auf dem Mantel fixiert. Die Verschlüsse der Kabelbinder lagern dabei in der Ecke an der Unterseite des Winkels.

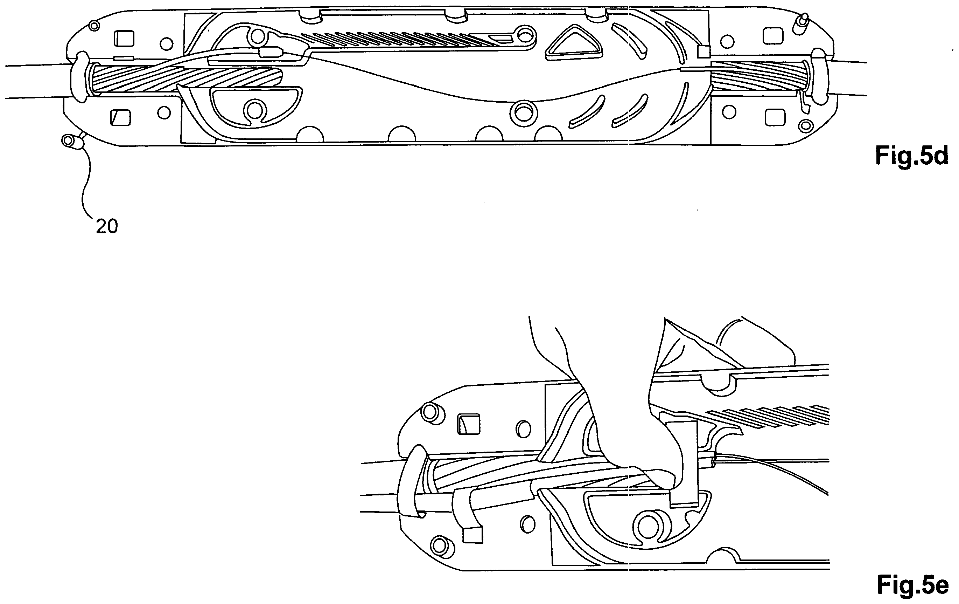

### Öffnen der Bündelader (siehe Figur 5d)

Anschließend wird die Bündelader mit der Bündeladerzange (von Rehau) angeschnitten. Aus Versorgungsrichtung (aktive Seite) bleiben 7 cm, gegenüberliegend (passive Seite) 12 cm der Bündelader unversehrt stehen. Gemessen wird von der Kabelbindermitte der jeweiligen Seite.

### Montage der Spleißkassette (siehe Figur 5e)

An der passiven Seite wird die Spleißkassette mit dem langen Einführungsschlitz voran zwischen Halbschale und Bündelader geführt. Durch anschließendes Eindrehen der Kassette unter die Bündelader ist die Endposition erreicht. Durch vier Schrauben wird die Kassette mittig befestigt.

### Zugentlastung und Befestigung des Hausanschlusskabels

Das Hausanschlusskabel wird auf einer Länge von ca. 1,30 m abgemantelt. Die Bündelader ragt 9 cm aus dem Kabelmantel heraus. Der Rest der Bündelader und die Zugentlastungsfäden werden entfernt. Zum Befestigen des Kabels an der Halbschale werden zwei Kabelbinder verwendet. Die Verschlüsse der Kabelbinder lagern dabei in der Ecke an der Unterseite der Halbschale. Anschließend werden die Bündeladern durch den selbstrastenden Verschluss 6 fixiert.

Die Fäden zur Zugentlastung werden um die Unterlegscheibe gelegt. Die Befestigung findet an der passiven Seite statt. Mit einer Schraube (M8), die mit einer weiteren Unterlegscheibe versehen ist, wird die Zugentlastung hergestellt. Zu diesem Zweck befindet sich als Gegenstück eine Käfigmutter am Winkel. Zum Fixieren des vorderen Kabelendes am Winkel wird ein kleiner Kabelbinder verwendet.

Besonderer Montagehinweis: Sind zwei Hausanschlusskabel zu verarbeiten, werden die in diesem Abschnitt bereits durchgeführten Arbeitsgänge für das zweite Kabel wiederholt. Die Befestigung dieses Kabels erfolgt neben dem ersten Hausanschlusskabel.

Für weiteren Halt sorgt ein großer Kabelbinder, der über die Halbschale samt Versorgungskabel und das Hausanschlusskabel (bzw. beide Hausanschlusskabel) gezogen wird. Die vordere Befestigung wird durch einen kleineren Kabelbinder hergestellt. Die Aussparung zur Montage befindet sich an der Halbschale gegenüber dem bereits montierten kleinen Kabelbinder des ersten Hausanschlusskabels.

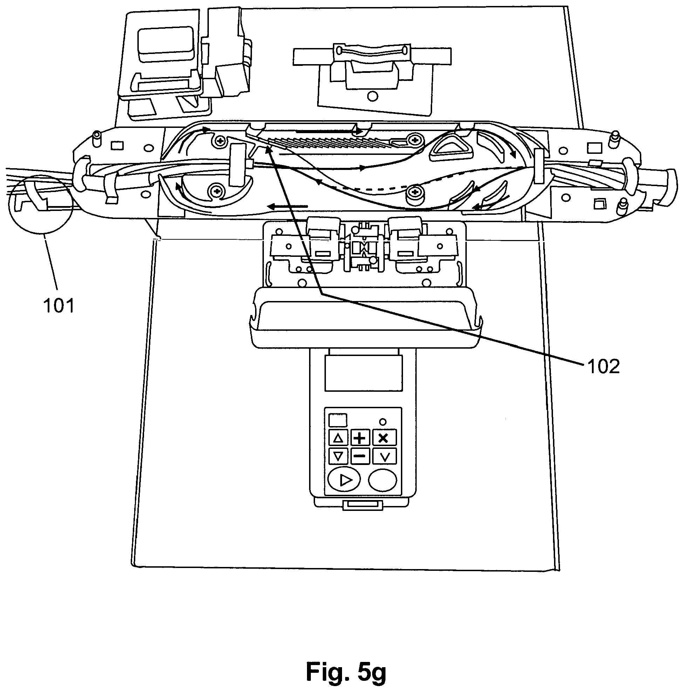

### Führung der Fasern in der Kassette (siehe Figur 5g)

Nach der Reinigung werden die Fasern des Hausanschlusskabels, wie in Figur 5g durch die orangefarbenen Pfeillinien angedeutet, in der Kassette geführt. Die Hausanschlussfasern werden zunächst an den äußeren Kassettenrand geführt. Dort werden die Fasern in mindestens drei Vorratsschleifen verlegt.

Die ungeschnittenen Fasern des Versorgungskabels werden, wie in Figur 5g durch die grüne Pfeillinie angedeutet, ohne Reinigung durch die Kassette geführt. Bei kurzen Faserlängen ist der direkte, durch die grüngestrichelte Linie angedeutete Weg zu verwunden. Nach der Entnahme der Faser mit der der Bündeiaderzange zugehörigen "Spachtel" wird der noch vorhandene Span der angeschnittenen Bündelader abgeschnitten.

Besonderer Montagehinweis: Um sicherzustellen, dass keine Faser abgetrennt wird, darf erst nach dem vorsichtigen Durchzählen der Fasern der Span abgeschnitten werden! Der Span muss an den Seiten mindestens 1,5 cm stehen bleiben, um keine Fasern beim Schneiden zu biegen.

### Vorbereitung des Spleißvorgangs (siehe Figur 5g)

Der Montagetisch wird durch zwei Klettbänder (101) am Kabel befestigt. Die Konstruktion wird durch einen in der Höhe einstellbaren Fuß (102) in eine waagerechte Position gebracht. Die Ebenen des Spleißtisches werden durch Höhenverstellungen auf die Geräte abgestimmt. Dabei sind die Einstellungen so zu optimieren, dass die Faser auf kürzestem Weg geführt werden kann.

### Der Spleißvorgang

Besonderer Montagehinweis: Bevor der Spleißvorgang startet, wird mit dem Spleißgerät ein "arctest" (Fasertest) mit Faserresten des Hausanschlusskabels durchgeführt. (So wird ein besseres Spleißergebnis durch Anpassung des Gerätes an Baustellenbedingungen erreicht).

Die zu spleißende Faser des Versorgungskabels wird an der passiven Seite durchtrennt und gereinigt. Die Faser des Hausanschlusskabels wird so verlegt, dass der der passiven Seite am nächsten gelegene Spleißschutzhalter 102 verwendet werden kann.

Jetzt werden die Fasern auf möglichst kurzer Strecke abgesetzt (je nach Werkzeug ca. 3 cm) und in die Faserhalter des Spleißgerätes eingelegt. Die Faserhalter werden ohne erneutes Einspannen der Faser nach dem Schneidvorgang im Schneidewerkzeug in das Spleißgerät gelegt. Danach wird der Spleißvorgang ausgeführt. Durch Platzierung des Spleißschutzkrimpers neben dem Schneidewerkzeug, ist dieser in einer guten Position, um den folgenden Krimpvorgang durchzuführen.

Abschließend wird der Spleißschutz, je nach Faserlänge, in den entsprechenden Halter abgelegt.

Besonderer Montagehinweis: Falls der Spleiß wiederholt werden muss, ist dies bis zu dreimal möglich, sofern auf geringst mögliche Faserverluste geachtet wird!

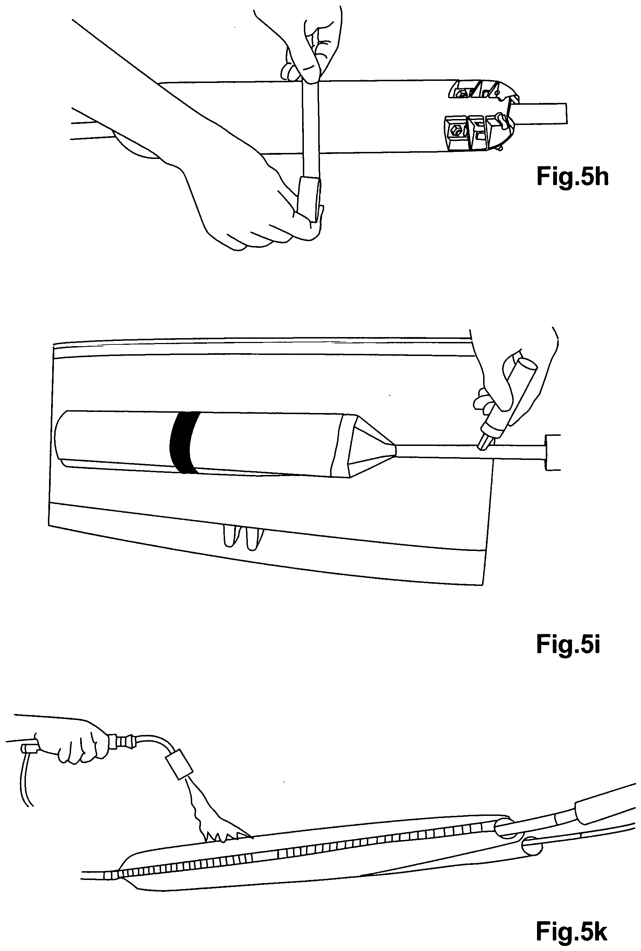

### Verschließen mit Deckeln (siehe Figur 5h)

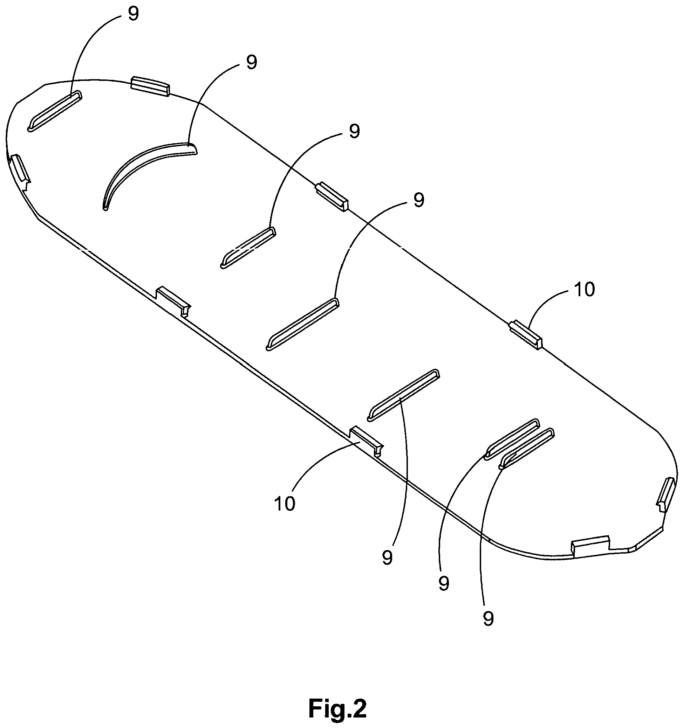

Der durchsichtige Deckel (Figur 2) wird auf die Spleißkassette 1 gebracht, verrastet und befestigt (verschraubt). Durch eine Sichtkontrolle (der Deckel ist transparent, bevorzugt aus schlagfestem Polystyrol), wird überprüft, ob eventuell Fasern im Innern der Spleißkassette eingeklemmt worden sind, was unbedingt zu verhindern ist. Anschließend wird die zweite Halbschale über die Konstruktion gelegt. Die auf Umschlag gefertigten Steckverbindungen der Aufnahmen müssen dabei ineinander geführt werden und bevorzugt mittels eines Isolierbands die beiden Halbschalen gegeneinander fixiert werden.

### Vorbereiten des Schrumpfvorgangs (siehe Figur 5i)

Der Trockenbeutel wird an einer Seite auf dem Kabel unmittelbar neben den Halbschalen angebracht. Der Außendurchmesser darf durch den Trockenbeutel nicht vergrößert werden.

Zunächst wird die Schutzeinlage um die Konstruktion gelegt und mit Isolierband fixiert. Mit einem Stift wird danach der Bereich der Dichtzonen auf dem Kabelmantel markiert und von Schmutz und Fett gereinigt. Dieser Bereich umfasst links und rechts der Schutzeinlage jeweils ca. 27 cm. Anschließend wird die Manteloberfläche mit Schmirgelleinen quer zur Kabellängsrichtung aufgeraut.

Besonderer Montagehinweis: Auch die Unterseite muss gründlich aufgeraut werden!

Nun werden die Flammschutzwickel auf den Kabelmantel von Versorgungs- und Hausanschlusskabel geklebt. Dabei reichen diese nur ca. 1 cm unter die Manschette. Um einen optimalen Haftuntergrund für die Manschette zu erhalten wird der Kabelmantel im gereinigten und aufgerauten Bereich zwischen Flamm- und Hitzeschutzwickel mit weicher Flamme vorgewärmt, bis sich ein leichter Glanz der Oberfläche einstellt. Danach wird die Manschette mittig angelegt und mit der Metallschiene verschlossen. Zwischen Kabeln, die auf gleicher Seite herausragen, wird eine Klammer angebracht (siehe Figur 5k).

Besonderer Montagehinweis: Die Verschlussschiene ist von Beginn an so anzubringen, dass sie über dem Versorgungskabel liegt. Die Konstruktikon darf nicht "zurechtgedreht" werden, da Bündeladern mitsamt der enthaltenen Fasern in der Muffe abknicken können!

### Der Schrumpfvorgang (siehe Figur 5k)

Mit Hilfe einer weichen Flamme beginnt der Schrumpfvorgang mit dem Vorwärmen der Verschlussschiene. Von der Mitte der Manschette aus wird die ganze Manschette rundum zu einer Seite hin geschrumpft. Die andere Seite der Manschette wird anschließend genauso bearbeitet.

Die Flamme ist beim Schrumpfvorgang in Schrumpfrichtung zu halten und langsam hin und her zu bewegen. Durch die Umschlagpunkte, die sich bei genügender Hitzezufuhr nach und nach schwarz verfärben, erkennt man, ob genügend Hitze zugeführt wurde.

An dem Übergang vom breiten Muffenkörper zum kleineren Kabelquerschnitt ist die stabile Metallschiene mit geeignetem Werkzeug (z. B. Hammerstiel) anzudrücken.

Besonderer Montagehinweis: Ein Schrumpfvorgang lässt sich nicht durch mehr Hitze beschleunigen! Gerade an den Enden schrumpft die Manschette langsam. Hier muss die Flamme sehr behutsam eingesetzt werden.

Für das Schrumpfmaterial kann auf Standardmaterial zurückgegriffen werden, also Material, welches ohnehin schon in großen Mengen auf dem Markt befindlich angeboten wird. Das wird möglich, weil der gesamte Muffenkörper einen Durchmesser aufweist, welcher kleiner 75 mm ist und somit mit Standardmaterial, z. B. vom Typ Reißfeste Reparaturmanschette GSRR 75/15 - 750 mm der Firma Corning, die gesamte Muffe sicher umschlossen und geschrumpft werden kann.

Weist das Manschettenmaterial eine Länge von etwa 75 cm auf, so besteht beidseitig des Muffengehäuses noch hinreichend Platz, dass die Manschette auch direkt auf die aus dem Muffengehäuse heraustretenden Kabel geschrumpft wird. Mit einer solch langen "Schrumpflänge" wird neben einer sicheren Wasserdichtigkeit auch für eine sichere Zugentlastung gesorgt.

Da die fertige Muffe im Vergleich zum Stand der Technik sehr kurz ist, nämlich nur etwa 75 cm, bedarf es auch nicht eines großen Erdaushubs.

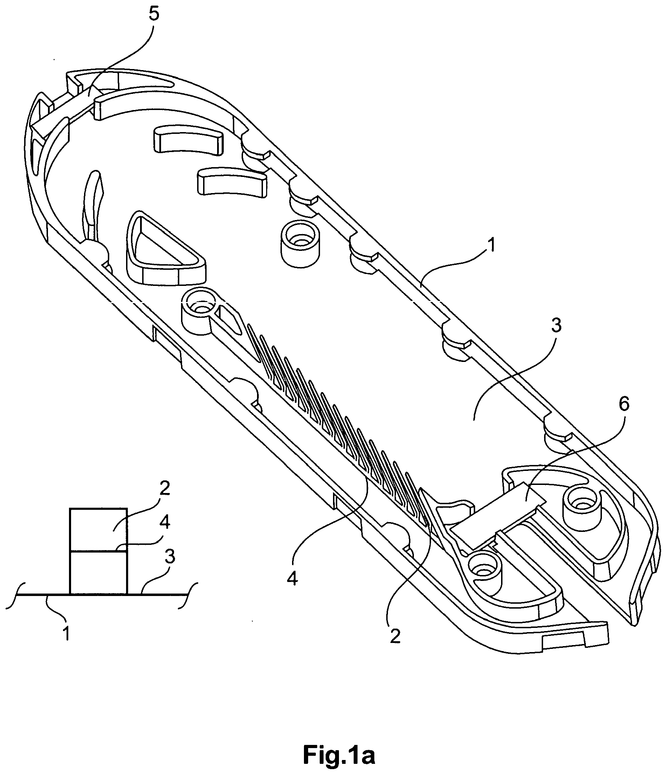

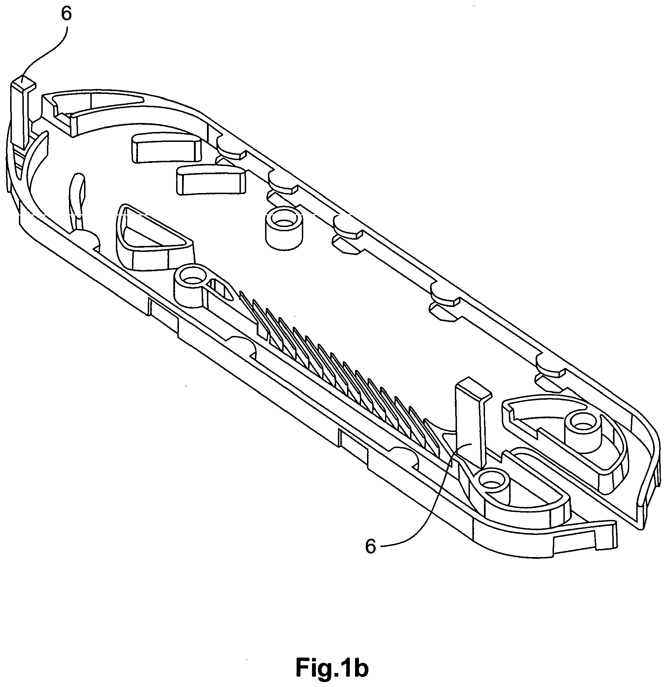

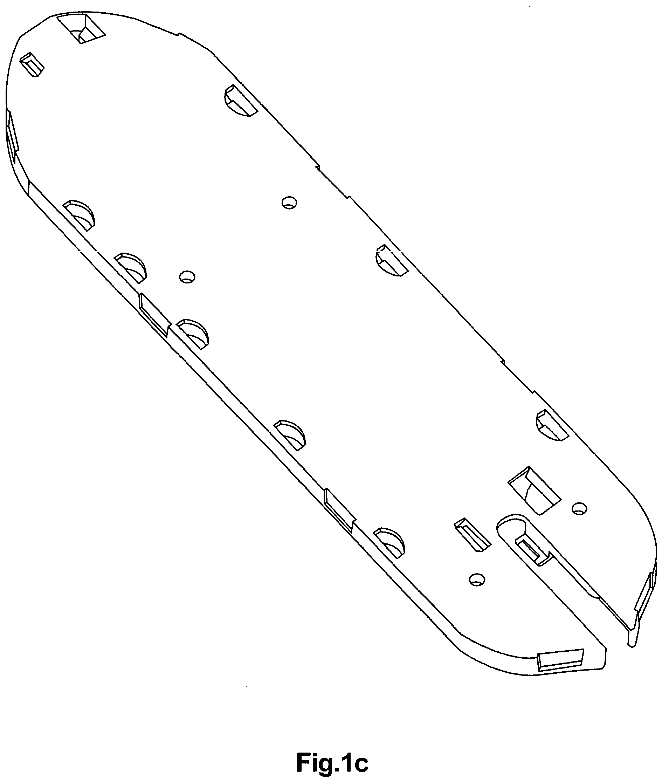

Die in **Figur 1** dargestellte Spleißkassette 1 zeigt eine gegenüber dem Stand der Technik erfindungsgemäße Besonderheit, die darin besteht, dass in dem Bereich, wo die zusammengespleißten Fasern mit dem Spleißschutz eingeklemmt sind, vertikale Wandelemente 2 ausgebildet sind, die nicht bis zum Boden 3 der Spleißkassette reichen, sondern quasi auf einer Erhöhung, also einem Damm 4, liegen. Damit ist stets gewährleistet, dass die eingeklemmten Spleißschutze (nicht dargestellt) stets über dem Kassettenboden 9 liegen und somit kann eine weitere eventuell unterhalb des Spleißschutzes liegende Faser nicht von der Klammer auf den Boden gepresst werden und damit kann eine solche Faser auch nicht verklemmt oder in anderer Weise beschädigt werden.

Ferner zeigt die Spleißkassette an ihren beiden Enden zwei einrastbare Niederhalter 5 und 6, die in **Figur 1a** in der Niederhaltung, in **Figur 1b** in der Offenhaltung dargestellt sind.

**Figur 1c** zeigt die Unterseite der in Figur 1 dargestellten Spleißkassette, die bevorzugt aus Kunststoff, z. B. Poly-Oxymetylen oder Polypropylen, besteht.

Die in **Figur 1** dargestellte Kassette hat bevorzugt eine Länge von etwa 25 bis 30 cm, eine Breite im Bereich von etwa 5 bis 10 cm, bevorzugt 7 cm, und eine Höhe von ca. 1 cm.

In einer weiteren Ausführungsform ist es auch möglich, dass der Deckel 8 - siehe **Figur 2** - der Spleißkassette 1, entsprechende Niederhalter 9 (die dort als längliche, vertikale oder verbogene Stege ausgeführt sind), die ebenso dafür sorgen, dass zwischen den Klammern und dem Deckel der Spleißklammer ein Abstand verbleibt, so dass eine Faser, die in diesem Bereich liegt, nicht mechanisch eingeklemmt wird.

**Figur 2** zeigt die Unterseite des Deckels der Spleißklammer und im Randbereich des Deckels sind Rastelemente 10 zu erkennen, welche die entsprechenden Einkerbungen an der Seite der Spleißkassette verrasten können, jedoch auch hiervon wieder lösbar sind.

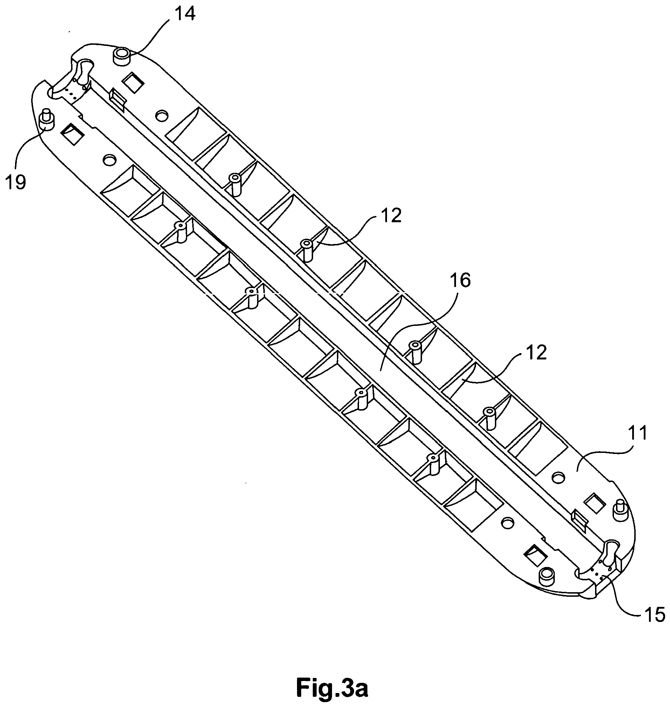

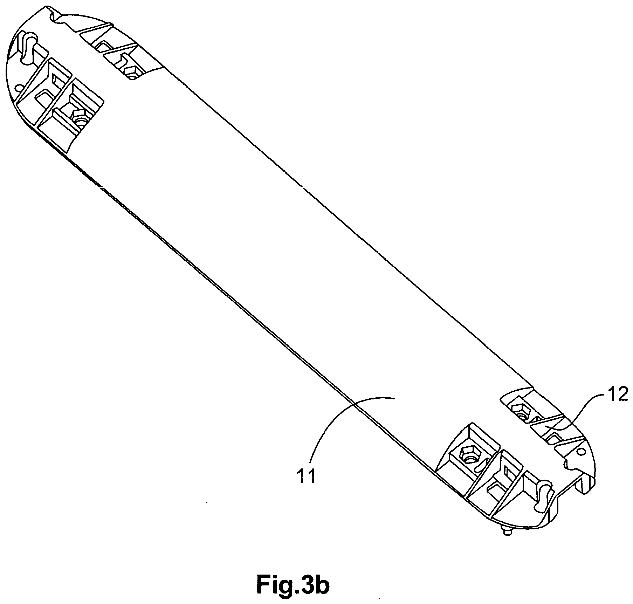

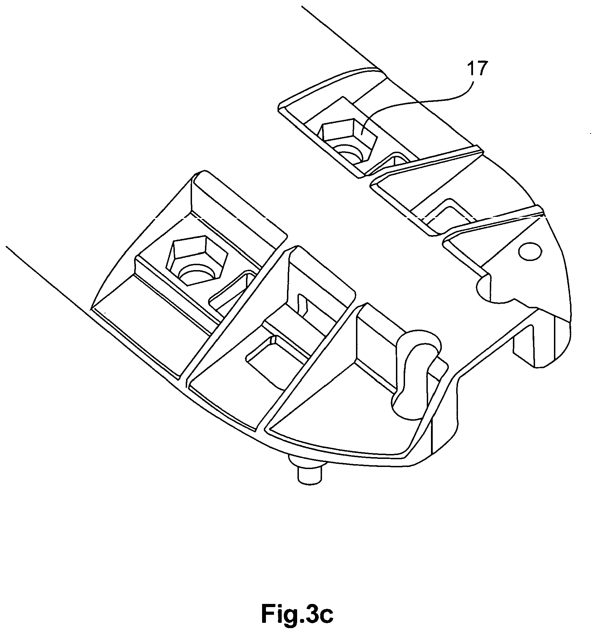

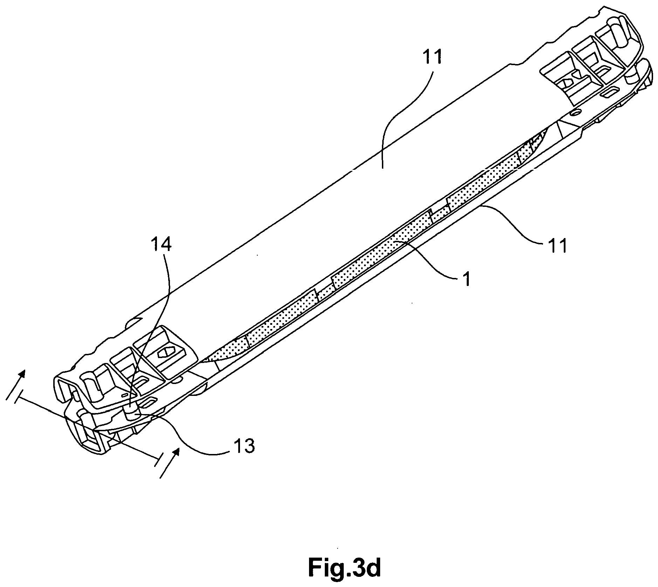

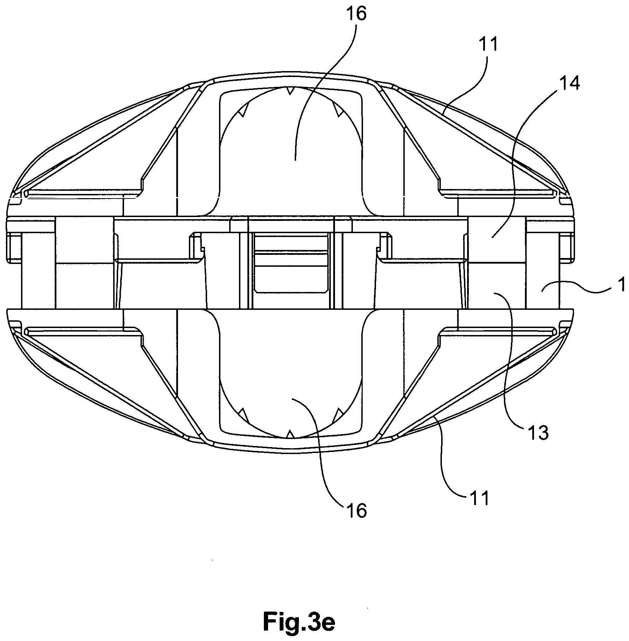

**Figur 3** zeigt nun verschiedene Ansichten der unteren und oberen Halbschalen, die nachfolgend auch Haltewinkel genannt werden, deren Material bevorzugt ein Kunststoff ist, z. B. Acrylnitril-Butadien-Styrol.

Da der untere und obere Haltewinkel 11, die praktisch die Unter- und Oberseite des Muffengehäuses bilden, einen identischen Aufbau aufweisen, ist deren bevorzugte Herstellung mittels eines einzigen Formwerkzeugs sehr günstig und vor allem dient eine solche Struktur und eine solche Konstruktion auch dazu, Fehler bei der Muffen-Montage durch das Verwechseln von Unter- und Oberseite zu vermeiden.

Der untere bzw. obere Haltewinkel sind durch die in den Figuren dargestellten Versteifungselemente 12, sei es Versteifungsstege, -rippen oder dgl., so strukturiert, dass das gesamte Gehäuse eine sehr große Stoßfestigkeit, aber auch Torsionssteifigkeit aufweist, um somit die von den Haltewinkeln aufgenommene Kassette und die Verbindung zwischen Zweig-LWL und Haupt-LWL sicher zu schützen und über einen sehr langen Zeitraum zu gewährleisten. An der Unterseite weisen die Haltewinkel Verbindungselemente (Vorsprünge, Öffnungen) 13, 14 auf, welche als Nut- und Federverbindung ausgebildet sind, so dass an diesen Stellen die Haltewinkel exakt gegeneinander geführt werden können und vor allem gegeneinander nicht mehr verschiebbar sind, sondern allenfalls noch voneinander entfernt werden können.

**Figur 3a** zeigt an den beiden Enden des Kanals für den Hauptlichtwellenleiter (bzw. dessen Kabel) auch Fixierelemente 15, welche bevorzugt aus Erhebungen bestehen, also z. B. Materialerhebungen, die im Querschnitt spitz zulaufen und einem unerwünschten Verschieben des Kabels innerhalb des Kabelkanals 16 entgegenwirken sollen.

**Figur 3b** zeigt, dass die Unterseite des Haltewinkels leicht gewölbt ist und dass auf der Unterseite des Haltewinkels sich wiederum Versteifungsrippen befinden sowie Aufnahmen für bereits beschriebenen Kabelbinder oder auch Schrauben, wozu entsprechende 6-Kantvertiefungen 17 vorgesehen sind.

**Figur 3d** zeigt eine zusammengesetzte Muffe (ohne Kabel), wobei zu erkennen ist, dass die Unter- bzw. Oberseite der Haltewinkel direkt aufeinanderliegen, über die Nutfederverbindung 13, 14 miteinander verbunden sind und zwischen sich die Spleißkassette 1 einschließen.

**Figur 3e** zeigt den Querschnitt von der Seite in Längsrichtung einer zusammengesetzten Muffe und lässt insbesondere den im Querschnitt etwa ovalen Durchmesser erkennen mit den Haltewinkeln 11 an der Unter- und Oberseite, der darin eingeschlossenen Spleißkassette 1 sowie den Nutfederverbindungen 13, 14 und den Kabelkanälen 16, wobei regelmäßig nur einer dieser beiden Kabelkanäle benötigt wird, es sei denn, es sollen mehrere Anschlüsse in einer einzigen Muffe untergebracht werden.

**Figur 4** zeigt einen Montagetisch, wobei die in Figur 4 dargestellten Abmaße natürlich variierbar sind und nur beispielhaft sind.

Es ist nun auch möglich, an der Spleißkassette selbst oder auch an dem Haltewinkel eine ganz spezielle dreidimensionale äußere Kontur vorzusehen, z. B. eine zylindrische oder ovale Erhebung von etwa 5 bis 10 mm Höhe, so dass hierum eine einzelne Bündelader herumlegbar ist, was zur Folge hat, dass sich an dieser Bündelader eine ganz bestimmte, die vordefinierte und entsprechend messbare Dämpfung einstellt.

Bei der Montage kann dies den Vorteil haben, dass der Monteur noch einmal durch eine Messung kontrollieren kann, ob er auch wirklich die richtige Bündelader (die zum richtigen Anschluss führt) montiert. Ist der vorbestimmte Dämpfungswert bekannt, kann also der Monteur durch eine einfache Messung, wenn er die betroffene Bündelader an die bestimmte dreidimensionale Kontur legt, auch die Dämpfung messen und sicher die richtige Bündelader verifizieren.

In **Figur 5d** ist unten links im Übrigen eine Verlängerung der erwähnten Nutfederverbindung zu erkennen, welche Teil des Haltewinkels ist, und von diesem abgenommen werden kann. Der Haltewinkel weist zwei solcher Verlängerungsstücke 20 als angespritzte Bauteile auf, was beim Aufeinandersetzen von zwei Haltewinkeln stets ausreicht, weil nämlich 4 Verlängerungsstücke vorhanden sind, um somit auch zwei Spleißkassetten übereinander aufzunehmen. Die wirksame Länge der Verlängerungsstücke beträgt daher etwa 10 bis 15 mm, je nachdem wie hoch die Spleißkassette mit dem Deckel ist.

Werden die Verlängerungsstücke nicht benötigt, können diese vom Monteur abgenommen und anderweitig verwertet werden. Der Vorteil dieser Konstruktion besteht darin, dass der Monteur mit den erfindungsgemäßen Haltewinkeln stets die Verlängerungsstücke 20 dabei hat und nicht etwa auf ein separates Reservoir solcher Verlängerungsstücke zurückgreifen muss.

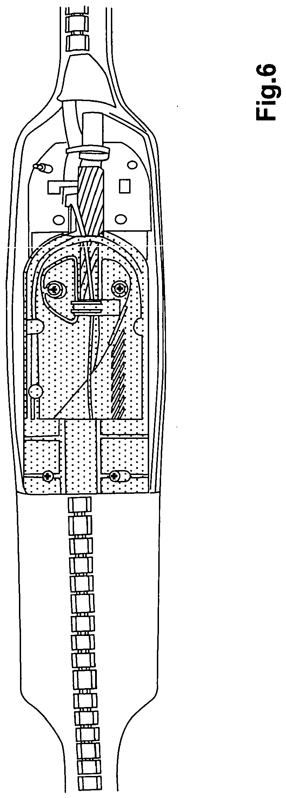

**Figur 6** zeigt eine erfindungsgemäße Muffe (mit Schrumpfschlauch versehen) in einer Aufrissdarstellung und mithin konstruktiven Aufbau der gesamten Muffe im Endzustand.

Alle in der vorliegenden Anmeldung dargestellten Maße sind beispielhaft zu verstehen und abänderbar.

Auch sei darauf verwiesen, dass es besonders vorteilhaft ist, wenn das verwendete Kabei, weiches die Lichtwellenleiter umschließt, über eine Markierung verfügt, nämlich über eine Markierung, wo der Wendepunkt der Lichtwellenleiter liegt, so dass dieser Wendepunkt entsprechend geortet werden kann, z. B. mit einem Metalldetektor, wenn die Markierung aus einem Metallstück im oder am Kabel besteht, so dass die Freilegung des Rohres, welches das Kabel aufnimmt, nicht zufällig, sondern zielgerichtet erfolgen kann.

Die Kosten für die gesamte Muffenkonstrukion einschließlich der Materialkosten sind äußerst gering und erlauben dennoch eine sehr schnelle Muffenkonstuktion, was auch die Montagekosten niedrig hält.

## Patentansprüche

1. Muffe, insbesondere Hausanschlussmuffe, für Lichtwellenleiter,
wobei die Muffe aus einer im Montagezustand der Muffe mittels eines Deckels (8) verschlossenen Spleißkassette (1), einem im Montagezustand der Muffe die Spleißkassette (1) unterseitig bedeckenden Unterteil (11) und einem im Montagezustand der Muffe die Spleißkassette (1) oberseitig bedeckenden Oberteil (11) besteht,
wobei das Unterteil (11) und das Oberteil (11) die Spleißkassette (1) in Längsrichtung der Muffe überragen,
wobei die Muffe im Querschnitt etwa oval ausgebildet ist und
wobei das Unterteil (11) und das Oberteil (11) Führungselemente aufweisen, die bei der Montageanordnung gegeneinander zur Anlage kommen,
**dadurch gekennzeichnet,**
**dass** zumindest das Unterteil (11) oder das Oberteil (11) einen Kabelkanal (16) für einen im Montagezustand der Muffe in Längsrichtung der Muffe durch die Muffe hindurchgeführten Hauptlichtwellenleiter des Lichtwellenleiters aufweist, wobei der Kabelkanal (16) im Montagezustand der Muffe abschnittsweise unter bzw. über der Spleißkassette (1) verläuft,
**dass** das Unterteil (11) und das Oberteil (11) im Montagezustand der Muffe die Spleißkassette (1) ausschließlich unter- bzw. oberseitig bedecken und
**dass** erst die fertig montierte Muffe von einem Schrumpfmantel oder einer Schrumpfmanschette umgeben ist, welcher bzw. welche das Unterteil (11) und das Oberteil (11) der Längsrichtung nach um wenigstens 10 cm, bevorzugt mehr als 15 cm, überragt.

2. Muffe nach Anspruch 1,
**dadurch gekennzeichnet, dass** das Unter- bzw. Oberteil (11) der Muffe mit dem identischen Werkzeug gefertigt werden bzw. identisch sind.

3. Muffe nach einem der vorhergehenden Ansprüche, **dadurch gekennzeichnet,**
**dass** der Kabelkanal (16) wenigstens so breit ist wie der Durchmesser eines Hauptlichtwellenleiter-Stranges und dass beidseitig des Kabelkanals (16) eine Versteifungsstruktur ausgebildet ist, vorzugsweise in Form von Rippen oder Formwänden, deren längliche Streckung quer, d. h. im Wesentlichen senkrecht zum Hauptlichtwellenleiter-Strang verläuft.

4. Muffe nach einem der vorhergehenden Ansprüche, **dadurch gekennzeichnet,**
**dass** die Muffe innerhalb des Kabelkanals (16) in den Kabelkanal (16) weisende Erhebungen aufweist, mittels denen der Hauptlichtwellenleiter-Strang nach der Montage innerhalb des Unter- bzw. Oberteils (11) der Muffe fixiertwird.

5. Muffe nach einem der vorhergehenden Ansprüche, **dadurch gekennzeichnet,**
**dass** Unter- bzw. Oberteil (11) aus Kunststoff besteht.

6. Muffe nach einem der vorhergehenden Ansprüche, **dadurch gekennzeichnet,**
**dass** die Spleißkassette (1) der Muffe mit dem Deckel (8) lösbar verschließbar ist, dass der Deckel (8) aus transparentem Material, vorzugsweise transparenten, lichtdurchlässigen Kunststoff besteht und
**dass** der Deckel (8) bevorzugt in das Innere der Spleißkassette (1) weisende Vorsprünge (13, 14) aufweist, mittels denen bevorzugt Kabelfasern oder dgl. niedergehalten werden.

7. Muffe nach einem der vorhergehenden Ansprüche, **dadurch gekennzeichnet,**
**dass** die Spleißkassette (1) einen Bereich aufweist, in welchem mehrere vertikale Wandelemente (2) schrägwinkliger Ausrichtung zur Längsachse der Spleißkassette (1), die im Wesentlichen in einer Reihe parallel zur Mittelachse der Spleißkassette (1) liegen ausgebildet sind, wobei diese Wandelemente (2) bevorzugt dazu dienen, zusammengespleißte Lichtwellenleiterfasern, die mit einem Spleißschutz versehen sind, aufzunehmen, dass die vertikalen Wandelemente (2) einen Bodenbereich aufweisen, welcher über dem Boden (3) der Spleißkassette (1) liegt.

8. Muffe nach einem der vorhergehenden Ansprüche, **dadurch gekennzeichnet,**
**dass** an der Spleißkassette (1) oder an dem Unter- bzw. Oberteil (11) der Muffe eine dreidimensionale Kontur ausgebildet ist, an die die Lichtwellenleiterfaser anlegbar ist, so dass sich an dieser Lichtwellenleiterfaser eine präzise vorbestimmbare Dämpfung einstellt.

9. Muffe nach einem der vorhergehenden Ansprüche, **dadurch gekennzeichnet,**
**dass** die Spleißkassette (1) aus Kunststoff besteht, z. B. aus schlagfestem Polystyrol.

10. Muffe nach einem der vorhergehenden Ansprüche, **dadurch gekennzeichnet,**
**dass** die Länge des Unter- bzw. Oberteils (11) etwa 35 bis 50 cm beträgt, vorzugsweise etwa 41 cm beträgt und/oder
**dass** bevorzugt die Breite des Unter- bzw. Oberteils (11) etwa 5 bis 10 cm, vorzugsweise etwa 6,5 bis 8 cm, besonders vorzugsweise etwa 7,5 cm beträgt und/oder
**dass** bevorzugt die Muffe ohne Schutzummantelung eine Höhe von etwa 5 bis 6 cm, vorzugsweise etwa 5,5 cm, aufweist, und/oder
**dass** die Ummantelung, die um Unter- und Oberteil (11) gelegt wird, eine Länge von etwa 70 bis 80 cm, vorzugsweise etwa 75 cm, aufweist, und/oder dass bevorzugt die Muffe im Querschnitt etwa oval ausgebildet ist und/oder dass bevorzugt das Gewicht des Unter- bzw. Oberteils (11) in etwa ein Gewicht von 100 bis 150 g, vorzugsweise 120 bis 130 g, vorzugsweise etwa 126 g, aufweist.

11. Muffe nach einem der vorhergehenden Ansprüche, **dadurch gekennzeichnet,**
**dass** die Spleißkassette (1) eine Anordnung zur Aufnahme mehrerer Spleißklammern aufweist, wobei diese Aufnahme aus mehreren, nebeneinander liegenden Spleißkammernuten besteht, die seitlich durch Wände gebildet werden und deren Boden oberhalb des Bodens (3) der Spleißkassette (1) ausgebildet ist, wobei der Abstand des Bodens der Spleißklammernut vom Boden der Spleißklammerkassette etwa mehr als 0,5 mm beträgt, bevorzugt etwa 2 bis 5 mm beträgt.

12. Verfahren zum Verbinden von Glasfaserkabeln mittels einer Muffe nach einem der vorhergehenden Ansprüche,
wobei das Verfahren durch folgende Schritte gekennzeichnet ist:
a) Ein Rohr, welches einen Hauptlichtwellenleiter aufnimmt, wird auf einer Länge von etwa 1,20 m bis 1,60 m, bevorzugt etwa 1,40 m, geöffnet.
b) Von einer Markierung auf dem Hauptlichtwellenleiter wird beidseitig ein Kabelmantel, der den Hauptlichtwellenleiter umschließt, auf einer Länge von etwa 10 bis 35 cm, bevorzugt 18 cm, entfernt.
c) Von dem Hauptlichtwellenleiter, der aus einer Vielzahl von Bündeladern besteht, wird die richtige Bündelader ausgezählt.
d) Die erforderliche Bündelader wird vom Wendepunkt her abgewickelt.
e) Die restlichen Bündeladern werden im Wendepunkt fixiert.
f) Der untere Haltewinkel, der das Unterteil (11) des Muffengehäuses ist, wird auf den Mantel des Hauptlichtwellenleiters fixiert, indem der Hauptlichtwellenleiter in den Kabelkanal (16) des Unterteils (11) eingelegt wird,
g) Die betroffene Bündelader wird mit einem entsprechenden Werkzeug geöffnet.
h) Eine Spleißkassette (1) wird mit ihrem Einführungsschlitz zwischen dem Halter und der Bündelader geführt und kommt zwischen der betroffenen Bündelader und dem Haltewinkel zur Anordnung, das Kassettenunterteil wird mit einem Haltewinkel befestigt.
i) Das Lichtwellenleiter-Hausanschlusskabel wird auf einer Länge von mehr als 50 cm, bevorzugt etwa 1 bis 2 m, besonders bevorzugt auf etwa 1,30 m, abgemantelt.
j) Das Hausanschlusskabel, welches ein Zweiglichtwellenleiter ist, wird an den Haltewinkeln fixiert.
k) Der untere Haltewinkel wird zusammen mit Spleißkassette (1) und Zweiglichtwellenleiter zum Spleißen auf einen Spleißtisch gelegt; nach dem Spleißvorgang wird die Spleißkassette (1) mit dem transparenten (durchsichtigen) Deckel (8) verschlossen, wobei der Deckel (8) die technische Funktion eines Sichtfensters aufweist, mittels dem überprüft werden kann, ob beim Aufbringen des Deckels Fasern zwischen Spleißgerät, Unterteil der Spleißkassette (1) und Deckel (8) eingeklemmt werden, was zu vermeiden ist.
l) Oberer Haltewinkel, der das Oberteil (11) des Gehäuses der Muffeist, wird auf das Unterteil (11) gelegt und beide Teile stehen hierbei direkt im Eingriff und liegen unter- wie auch oberseitig in der Spleißkassette (1) an, wobei das Unterteil (11) und das Oberteil (11) die Spleißkassette (1) ausschließlich unter- bzw. oberseitig bedecken.
m) Um die Anordnung aus Haltewinkel (11) und darin eingelegter Spleißkassette (1) wird eine Schutzanlage gelegt.
n) Es werden Flammschutzwickel auf den Kabelmantel von Hauptlichtwellenleiter wie auch Zweiglichtwellenleiter gebracht.
o) Es wird eine Manschette um die gesamte Anordnung geschlagen und mit einer Schiene verschlossen.
p) Mit Hilfe von Wärmeeinwirkung, bevorzugt mittels einer- Flamme, wird die Manschette geschrumpft bis sie fest auf dem Gehäuse der Muffe anliegt als auch beidseitig der Muffe die dort befindlichen Kabel fest umschließt, wobei einzelne dieser vorgenannten Schritte vertauschbar sind.

## Claims

1. A junction box, in particular a service junction box, for optical waveguides, wherein the junction box is composed of a splice cassette (1) that is closed in the assembly state of the junction box by means of a cover (8), a lower part (11) covering the lower side of the splice cassette (1) in the assembly state of the junction box and an upper part (11) covering the upper side of the splice cassette (1) in the assembly state of the junction box,
wherein the lower part (11) and upper part (11) protrude the splice cassette (1) in the longitudinal direction of the junction box,
wherein the junction box is formed approximately oval in cross-section and
wherein the lower part (11) and the upper part (11) have guide elements which rest against one another in the assembly arrangement,
**characterized in**
**that** at least the lower part (11) or the upper part (11) has a cable conduit (16) for a main optical waveguide of the optical waveguide, which main optical waveguide in the assembly state of the junction box is guided through the junction box in the longitudinal direction of the junction box, wherein in the assembly state of the junction box the cable conduit (16) runs section by section below and above of the splice cassette (1), respectively,
**that** in the assembly state of the junction box the lower part (11) and the upper part (11) cover the splice cassette (1) exclusively on the lower side and the upper side, respectively, and
**that** only the completely assembled junction box is surrounded by a shrink shell or shrink sleeve which protrudes beyond the lower part (11) and the upper part (11) in the longitudinal direction by at least 10 cm, preferably by more than 15 cm.

2. The junction box according to claim 1,
**characterized in that** the lower and upper part (11) of the junction box are manufactured with the identical tool and/or are identical.

3. The junction box according to any one of the preceding claims, **characterized in that** the cable conduit (16) is at least as wide as the diameter of a main optical waveguide bundle and that on both sides of the cable conduit (16) there is formed a reinforcement structure, preferably in the form of ribs or molded walls, the longitudinal extent of which runs transverse, i.e. substantially perpendicular to the main optical waveguide bundle.

4. The junction box according to any one of the preceding claims, **characterized in that** within the cable conduit (16) the junction box has protrusions extending into the cable conduit (16) by means of which the main optical waveguide bundle is fixed after assembly within the lower and/or upper part (11) of the junction box.

5. The junction box according to any one of the preceding claims, **characterized in that** the lower and/or upper part (11) is composed of plastics.

6. The junction box according to any one of the preceding claims, **characterized in that** the splice cassette (1) of the junction box can be closed with the cover (8) in a detachable manner,
that the cover (8) is composed of transparent material, preferably transparent, light-transmissive plastics, and
that the cover (8) preferably has projections (13, 14) which extend into the inside of the splice cassette (1) and by means of which preferably cable fibers or the like are held down.

7. The junction box according to any one of the preceding claims, **characterized in that** the splice cassette (1) has an area in which a plurality of vertical wall elements (2) are formed which have an angled orientation with respect to the longitudinal axis of the splice cassette (1) and which lie substantially in one row parallel to the center axis of the splice cassette (1), wherein these wall elements (2) preferably serve for the purpose of receiving optical waveguides that are spliced together and are provided with splice protection, that the vertical wall elements (2) have a bottom area which lies above the bottom (3) of the splice cassette (1).

8. The junction box according to any one of the preceding claims, **characterized in that** on the splice cassette (1) or on the lower and/or upper parts (11) of the junction box there is formed a three-dimensional contour against which the optical waveguide can rest, so that a precise predeterminable damping is achieved at this optical waveguide.

9. The junction box according to any one of the preceding claims, **characterized in that** the splice cassette (1) is composed of plastics, e.g. impact-resistant polystyrene.

10. The junction box according to any one of the preceding claims, **characterized in that** the length of the lower and upper part (11) is approximately 35 to 50 cm, preferably approximately 41 cm, and/or
that preferably the width of the lower and upper part (11) is approximately 5 to 10 cm, preferably approximately 6.5 to 8 cm, particularly preferably approximately 7.5 cm, and/or
that preferably the junction box without protective sheathing has a height of approximately 5 to 6 cm, preferably approximately 5.5 cm, and/or
that the sheathing that is placed around upper and lower parts (11) has a length of approximately 70 to 80 cm, preferably approximately 75 cm, and/or
that preferably the junction box is formed approximately oval in cross-section and/or
that preferably the weight of the lower and/or upper part (11) has approximately a weight of 100 g to 150 g, preferably 120 to 130 g, preferably approximately 126 g.

11. The junction box according to any one of the preceding claims, **characterized in that** the splice cassette (1) has an arrangement for receiving a plurality of splice clamps, wherein this arrangement is composed of a plurality of adjacent splice clamp grooves which are formed on the side by walls and the bottoms of which are formed above the bottom (3) of the splice cassette (1), wherein the distance of the bottom of the splice clamp groove from the bottom of the splice clamp cassette is approximately more than 0.5 mm, preferably approximately 2 to 5 mm.

12. A method for connecting fiber optic cables by means of a junction box according to any one of the preceding claims,
wherein the method is **characterized by** the following steps:
a) A pipe accommodating a main optical waveguide is opened over a length of approximately 1.20 m to 1.60 m, preferably approximately 1.40 m.
b) A cable sheath enclosing the main optical waveguide is removed on both sides of a mark over a length of approximately 10 to 35 cm, preferably 18 cm.
c) The correct bundle conductor is enumerated from a plurality of bundle conductors of which the main optical waveguide is composed.
d) The necessary bundle conductor is unwound beginning at the inflection point.
e) The remaining bundle conductors are fixed in the inflection point.
f) The lower mounting bracket, which is the lower part (11) of the junction box housing, is fixed on the shell of the main optical waveguide by inserting the main optical waveguide into the cable duct (16) of the lower part (11).
g) The bundle conductor concerned is opened using an appropriate tool.
h) A splice cassette (1) is guided with its insertion slot between the bracket and the bundle conductor and is being arranged between the bundle conductor concerned and the mounting bracket; the cassette lower part is fastened with a mounting bracket.
i) The optical waveguide service cable is stripped over a length of more than 50 cm, preferably approximately 1 to 2 m, particularly preferably approximately 1.30 m.
j) The service cable, which is a branching optical waveguide, is fixed on the mounting brackets.
k) The lower mounting bracket together with the splice cassette (1) and the branching optical waveguide is placed onto a splicing table for splicing; after the splicing process, the splice cassette (1) is closed with the transparent (translucent) cover (8), wherein the cover (8) has the technical function of an inspection window by means of which it can be checked, if, when putting on the cover (8), fibers are jammed between the splicing apparatus, the lower part of the splice cassette (1) and the cover (8), which is to be avoided.
l) The upper mounting bracket, which is the upper part (11) of the housing, is placed onto the lower part (11) and hereby both parts are in direct engagement and are abutting on the lower side as well as upper side in the splice cassette (1), wherein the lower part (11) and the upper part (11) cover the slice cassette (1) exclusively on the lower and the upper side, respectively.
m) A protection device is placed around the arrangement of the mounting bracket (11) and the splice cassette (1) inserted therein.
n) Flame protection wraps are applied onto the cable sheath of the main optical waveguide as well as the branching optical waveguide.
o) A sleeve is wrapped around the entire arrangement and closed using a rail.
p) The sleeve is shrunk by means of heat exposure, preferably by means of a flame, until it fits tightly on the housing of the junction box and also tightly encloses the cables located on both sides of the junction box, wherein individual steps of these aforementioned steps are exchangeable.

## Revendications

1. Manchon, notamment manchon pour connexions domestiques pour câbles à fibres optiques,
le manchon étant constitué d'une cassette d'épissure (1) fermée en position de montage du manchon au moyen d'un couvercle (8), d'une partie inférieure (11) recouvrant la face intérieure de la cassette d'épissure (1) dans la position de montage du manchon et d'une partie supérieure (11) recouvrant la face supérieure de la cassette d'épissure (1) dans la position de montage du manchon,
la partie inférieure (11) et la partie supérieure (11) saillant par-dessus la cassette d'épissure (1) dans la direction longiudinale du manchon,
dans la section transversale, le manchon étant conçu sous forme approximativement ovale et
la partie inférieure (11) et la partie supérieure (11) comportant des éléments de guidage, qui sur l'agencement de montage viennent s'appliquer l'un sur l'autre, **caractérisé**
**en ce qu'**au moins la partie inférieure (11) ou la partie supérieure (11) comporte un caniveau électrique (16) pour un câble à fibre optique principal du câble à fibres optique, guidé à travers le manchon dans la direction longitudinale du manchon dans la position de montage du manchon, dans la position de montage du manchon, le caniveau électrique (16) s'écoulant par sections dans ou au-dessus de la cassette d'épissure (1),
**en ce que** dans la position de montage du manchon, la partie inférieure (11) et la partie supérieure (11) recouvrent la cassette d'épissure (1) exclusivement sur la face inférieure ou supérieure,
**en ce qu'**une fois en position de montage terminée, le manchon est entouré par une enveloppe contractée ou une manchette contractée, laquelle saillit par-dessus la partie inférieure (11) et la partie supérieure (11) dans la direction longitudinale d'au moins 10 cm, de préférence de plus de 15 cm.

2. Manchon selon la revendication 1,
**caractérisé en ce que** la partie inférieure ou la partie supérieure (11) du manchon sont fabriquées avec un outil identique ou sont identiques.

3. Manchon selon l'une quelconque des revendications précédentes, **caractérisé en ce que** le caniveau électrique (16) est au moins aussi large que le diamètre d'un tronçon du câble à fibres optiques principal et **en ce que** de part et d'autre du caniveau électrique (16) est conçue une structure de renfort, de préférence sous la forme de nervures ou de parois moulées, dont l'extension longitudinale s'écoule à la transversale, c'est à dire sensiblement à la perpendiculaire du câble à fibres optiques principal.

4. Manchon selon l'une quelconque des revendications précédentes, **caractérisé en ce qu'**à l'intérieur du caniveau électrique (16), le manchon comporte des élévations saillant dans le caniveau électrique (16) au moyen desquelles, après le montage, on fixe le tronçon du câble à fibres optiques principal à l'intérieur de la partie inférieure ou supérieure (11) du manchon.

5. Manchon selon l'une quelconque des revendications précédentes, **caractérisé en ce que** la partie inférieure ou supérieure (11) est en matière plastique.

6. Manchon selon l'une quelconque des revendications précédentes, **caractérisé en ce que** la cassette d'épissure (1) du manchon peut se fermer de manière amovible avec le couvercle (8), **en ce que** le couvercle (8) est constitué d'une matière transparente, de préférence d'une matière plastique transparente, laissant passer la lumière et
**en ce que** le couvercle (8) comporte des saillies (13, 14) dirigées de préférence vers l'intérieur de la cassette d'épissure (1),au moyen desquelles de préférence des brins du câble ou similaires sont maintenus vers le bas.

7. Manchon selon l'une quelconque des revendications précédentes, **caractérisé en ce que** la cassette d'épissure (1) comporte une région dans laquelle sont conçus plusieurs éléments de paroi (2) verticaux, orientés à la diagonale (1), qui se situent sensiblement dans une rangée à la parallèle de l'axe médian de la cassette d'épissure (1), lesdits éléments de paroi (2) servant de préférence à recevoir des fibres optiques épissurées qui sont munies d'une protection contre l'épissure, **en ce que** les éléments de paroi (2) verticaux comprennent une région de fond inférieur, laquelle se situe au-dessus du fond inférieur (3) de la cassette d'épissure (1).

8. Manchon selon l'une quelconque des revendications précédentes, **caractérisé en ce que** sur la cassette d'épissure (1) ou sur la partie inférieure ou supérieure (11) du manchon est conçu un contour tridimensionnel, sur lequel on peut appliquer la fibre optique, de telle sorte qu'il s'installe sur ladite fibre optique une atténuation prédéfinissable précise.

9. Manchon selon l'une quelconque des revendications précédentes, **caractérisé en ce que** la cassette d'épissure (1) est constituée en matière plastique, par ex. en matière plastique antichoc.

10. Manchon selon l'une quelconque des revendications précédentes, **caractérisé en ce que** la longueur de la partie inférieure ou supérieure (11) est d'environ de 35 à 50 cm, de préférence d'environ 41 cm et/ou
**en ce que** de préférence, la largeur de la partie inférieure ou supérieure (11) est d'environ 5 à 10 cm, de préférence d'environ 6,5 à 8 cm, de manière particulièrement préférentielle de 7,5 cm et/ou
**en ce que** de préférence, le manchon sans gaine protectrice présente une hauteur de 5 à 6 cm, de préférence d'environ 5,5 cm, et/ou
**en ce que** la gaine que l'on pose autour de la partie inférieure et de la partie supérieure (11) présente une longueur d'environ 70 à 80 cm, de préférence d'environ 75 cm, et/ou **en ce que** de préférence, le manchon est conçu avec une section transversale approximativement ovale et/ou
**en ce que** de préférence, le poids de la partie inféirure ou supérieure (11) est d'approximativement 100 à 150 g, de préférence de 120 à 130 g, de préférence d'environ 126 g.

11. Manchon selon l'une quelconque des revendications précédentes, **caractérisé en ce que** la cassette d'épissure (1) comporte un agencement destiné à recevoir plusieurs crampons d'épissure, ledit réceptacle étant constitué de plusieurs rainures pour crampons d'épissure placées côte à côte, qui sont formées latéralement par des parois et dont les fonds inférieurs sont conçus au-dessus du fond inférieur (3) de la cassette d'épissure (1), l'écart entre le fond inférieur de la rainure pour crampon d'épissure et le fond inférieur de la cassette d'épissure étant approximativement supérieur à 0,5 mm, étant de préférence d'approximativement 2 à 5 mm.

12. Procédé destiné à relier des câble à fibres optiques au moyen d'un manchon selon l'une quelconque des revendications précédentes,
le procédé étant **caractérisé par** les étapes suivantes :
a) on ouvre un tube, lequel reçoit un câble de fibre optique principal sur une longueur d'approximativement 1,20 m à 1,60 m, de préférence d'approximativement 1,40 m.
b) A partir d'un marquage sur le câble à fibre optique principal, on retire de part et d'autre une gaine de câble, qui entoure le câble fibre optique principal sur une longueur d'approximativement 10 à 35 cm, de préférence de 18 cm.
c) On dépouille le bon toron du câble de fibre optique principal qui est constitué d'une pluralité de torons.
d) On déroule le toron requis à partir du point tournant.
e) On fixe les torons restants sur le point tournant.
f) On fixe l'équerre de fixation inférieure qui est la partie inférieure (11) du corps du manchon sur la gaine du câble de fibre optique principal en ce qu'on insère 1' câble de fibre optique principal dans le caniveau électrique (16) de la partie inférieure (11),
g) On ouvre le toron concerné avec un outil correspondant.
h) On guide une cassette d'épissure (1) par son encoche d'introduction entre le support et le toron et on la dispose entre le toron concerné et l'équerre de fixation, on fixe la partie inférieure de la cassette avec une équerre de fixation.
i) On dénude le câble domestique de connexion du câble à fibre optique sur une longueur de plus de 50 cm, de préférence d'environ 1 à 2 m, de manière particulièrement préférentielle, sur environ 1,30 m.
j) On fixe le câble de connexion domestique qui est un câble à fibre optique de dérivation sur l'équerre de fixation.
k) Pour l'épissure, on pose l'équerre de fixation inférieure, en commun avec la cassette d'épissure (1) et le câble à fibres optiques de dérivation sur une table d'épissure ; après le processus d'épissure, on ferme la cassette d'épissure (1) avec le couvercle (8) transparent (limpide), le couvercle (8) assurant la fonction technique d'un regard, à l'aide duquel il peut être vérifié si lors de la pose du couvercle, des fibres se coincent entre l'appareil d'épissure, la partie inférieure de la cassette d'épissure (1) et le couvercle (8) ce qui doit être évité.
l) On pose l'équerre de fixation supérieure qui est la partie supérieure (11) du corps du manchon sur la partie inférieure (11) et les deux pièces sont en engagement direct à cet effet et sont adjacentes sur les faces inférieure et supérieure à la cassette d'épissure (1), la partie inférieure (11) et la partie supérieure (11) recouvrant la cassette d'épissure (1) exclusivement sur la face inférieure ou supérieure.
m) On pose un dispositif protecteur autour de l'agencement comprenant l'équerre de fixation (11) et la cassette d'épissure (1) qui y est insérée.
n) On applique des enveloppements ignifuges sur la gaine du câble du câble à fibres optiques principal, tout comme sur celle du cable à fibres optiques de dérivation.
o) On entoure l'ensemble de l'agencement d'une manchette et on la ferme avec un rail.
p) Par effet de chaleur, de préférence à l'aide d'une flamme, on contracte la manchette jusqu' à ce qu'elle soit solidement adjacente au corps du manchon, et entoure solidement de part et d'autre du manchon les câbles qui s'y trouvent, des étapes indidivuelles parmi celles qui sont précédemment citées étant interchangrables.
